# EUROPEAN PATENT SPECIFICATION

(11) **EP 2 623 341 B1**
(45) Date of publication and mention of the grant of the patent: **07.09.2016**
(21) Application number: 11828378.7
(22) Date of filing: 26.09.2011
(51) Int. Cl.: B60C 13/02, B60C 13/00

(54) **TYRE**
REIFEN
PNEU

(30) Priority: 30.09.2010 JP 2010222365
(43) Date of publication of application: 07.08.2013
(73) Proprietor: Bridgestone Corporation, Tokyo 104-8340 (JP)
(72) Inventor: NAKAMURA, Takamitsu, Kodaira-shi Tokyo 187-8531 (JP)
(74) Representative: Lamb, Martin John Carstairs
(86) International application number: PCT/JP2011/005374
(87) International publication number: WO 2012/042812

(56) References cited:
- FR-A1- 2 876 954
- JP-A- H 092 028
- JP-A- 4 121 205
- JP-A- 8 025 920
- JP-A- H0 825 920
- JP-A- 10 147 114
- JP-A- 63 106 108
- US-A- 4 413 663

## Description

### TECHNICAL FIELD

The present invention relates to a pneumatic tire or to a solid tire which includes a plurality of ridges arranged in an annular form on a surface of a side portion of the tire, and a color line extending intermittently or continuously in an annular space situated on an inner peripheral side from a region where the ridges are arranged. In particular, the present invention proposes a technique for improving a decorative appearance of the tire to enhance the added value of the tire and realize a differentiation from other tires.

### RELATED ART

In order to improve design, to enhance identifiability of a mark consisting of characters, graphics, symbols and patterns, and to make an uneven surface of a side portion less noticeable, it has been conventionally and commonly implemented that a plurality of ridges each extending in a desired direction in a desired shape are arranged in an annular form concentric with a tire on an surface of the side portion including outer surfaces of a sidewall portion and a bead portion. Attention is drawn to the disclosures of JP-HO9-2028, US 4,413,663, JP-HO8-25920 and FR 2,876,954.

### SUMMARY OF THE INVENTION

The present invention is intended to provide a tire that can further improve the decorative nature of the side portion of the tire with respect to the conventional techniques and can effectively prevent unintended deterioration of the decorative function, that is a tire having a plurality of ridges arranged in an annular form on a surface of a side portion, wherein a color line is formed to extend in an annular space situated on an inner peripheral side from a region where the ridges are arranged and radially inward from a tire maximum width position, wherein, the color line is formed on a flat surface situated on the inner peripheral side from the region where the ridges are arranged wherein, the color line is formed on a flat surface situated on the inner peripheral side from the region where the ridges are arranged and radially inward from a tire maximum width position, the color line not overlapping the region where the ridges are arranged in the tire radius direction, the color line being adjacent to the inner periphery of the region where the ridges are arranged, the color line extending in an annular form, the color line being formed by printing, and wherein the width of the color line in the tire radial direction is smaller than the width of the region where the ridges are arranged.

The tire of the present invention has a plurality of ridges each extending in a desired direction in a desired shape such as a linear shape, a bent line shape, or a curved line shape on a surface of a side portion and arranged in an annular shape concentric with an axis line of the tire. The tire is provided with a color line extending either intermittently or continuously in an annular space situated on an inner peripheral side from a region where the ridges are arranged and radially inwardly from a tire maximum width position, i.e., a position where a particularly large bent deformation of the side portion occurs toward outside in the width direction of the tire while rolling under load.

The term "tire maximum position" as used herein refers, for a solid tire, to the maximum straight line width position between the surfaces of the side portions excluding any convex such as a pattern or letter on the surfaces of the side portions of the tire; and, for a pneumatic tire, to the maximum straight line width position between the sidewalls excluding any convex such as a pattern or letter on the surface of the sidewall of the tire under the condition that the tire is mounted to an applicable rim, filled with a predetermined air pressure with no-load applied on the tire. The term "applicable rim" as used herein refers to a rim predetermined by specifications listed below in accordance with the size of the tire. The term "predetermined air pressure" as used herein refers to a predetermined air pressure corresponding to the maximum loading capacity under specifications listed below. The term "the maximum loading capacity" as used herein refers to the maximum permissible weight to be loaded on the tire under specifications listed below. It is noted that the term "air" as used herein may be substituted by an inert gas such as nitrogen gas or the like.

The term "specification" as used herein refers to valid industrial specifications in the regions where the tire is produced or used. For example, in the U.S., it refers to "The Tire and Rim Association Inc. YEAR BOOK"; in Europe, it refers to "The European Tyre and Rim Technical Organisation STANDARD MANUAL"; and in Japan, it refers to JATMA (The Japan Automobile Tyre Manufacturers Association) YEAR BOOK.

In addition, the term "color line" as used herein refers to a line having a color including white and black which is different from the base color of the surface of the side portion of the tire. Such a "color line" is formed by printing. Meanwhile, it is often advantageous in enhancing the decorative effect without being affected by a body color of a vehicle on which the tire is mounted that the color of the "color line" is different from the body color of the vehicle since the color line has a distinctive color.

In this type of tire, the color line is formed on a flat surface situated on the inner peripheral side from the region where the ridges are arranged, on a flat surface adjacent to the inner periphery of the region where the ridges are arranged.

In addition, it is preferred that the color line is formed at least between a region where a brand name and a company name are arranged and a regulatory marking region situated radially outward from a rim line.

It should be noted that the term "regulatory marking region" as used herein refers to a space secured outside of the rim line for arranging, for example, engravings indicating the size and structure of the tire mandatory in the Japanese market (the size of which varies between about 12 and about 20mm due to various regulatory requirements according to the country of sale).

According to the present invention, the color line is formed to extend intermittently or continuously on the inner peripheral side from a region where the ridges are arranged and radially inward from the maximum width position of the tire, so that the color line is situated radially inward from the position where a large bent deformation of the side portion occurs. As a result, even when the side portion of the tire is flexural deformed repeatedly while rolling under load, damage such as a potential crack on the color line can be effectively prevented, and the possibility of the color line wearing out due to rubbing against the curb or the like can be effectively eliminated. Therefore, a highly decorative effect can be maintained over a long period of time.

In addition, the color line of the tire is formed on the inner peripheral side from the region where the ridges are arranged, so that the highly decorative effect can be ensured without sacrificing the identifiability of the marks often arranged on the region where the ridges are arranged or on the outer peripheral side from the region where the ridges are arranged.

In addition, by allowing the color line to be distinguished, an observer may have an impression that a larger tire or a so-called "inch-upped" tire is mounted.

Meanwhile, when the color line is formed on the flat surface situated on the inner peripheral side from the region where the ridges are arranged, and any convex and concave are removed from the region where the color line is formed, the risk of an increase of the air resistance of the tire while rolling under load due to the presence of a convex or a concave can be sufficiently eliminated. When the color line is formed adjacent to the inner periphery of the region where the ridges are arranged, the identifiability of the marks which may be formed adjacent to the region where the ridges are arranged can be increased due to the decorative effect of the color line.

In addition, when the color line is formed at least between the radially outward region where a brand name and a company name are relatively largely arranged and the regulatory marking region which is situated radially outward from a rim line and radially inward from the region where the brand name and the like are arranged, and in which the size of the tire and the like are relatively small engraved, the highly decorative effect of the color line allows the marks formed radially inward and outward from the color line to be distinctive to improve the identifiability of the marks.

### BRIEF DESCRIPTION OF DRAWINGS

Fig. 1 is a side view of a pneumatic tire according to one embodiment of the present invention.
Fig. 2 is a cross-sectional view illustrating a half portion of a pneumatic tire in the width direction under the condition that the pneumatic tire is assembled on a rim and filled with a predetermined air pressure, with the region where the ridges are arranged and the region where the color line is formed being superimposed.

### DESCRIPTION OF EMBODIMENTS

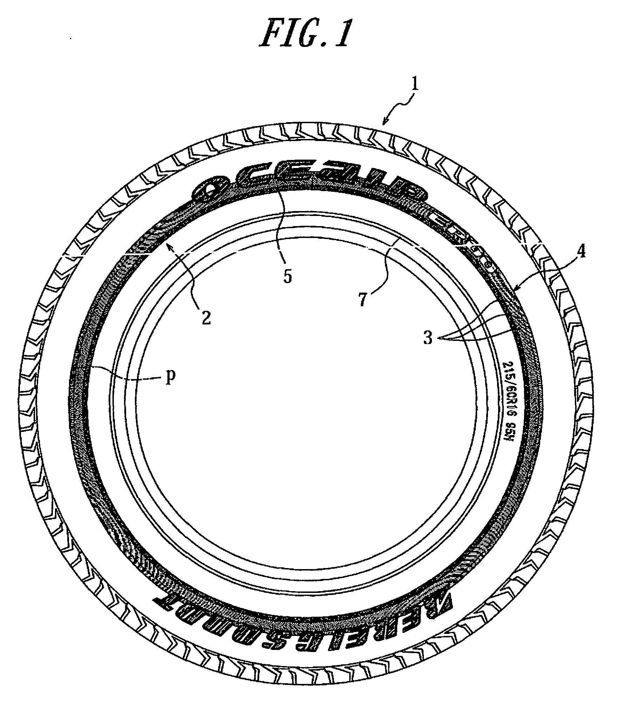

An embodiment of the present invention is described below with reference to the drawings. In Fig. 1, the reference numeral 1 generally denotes a pneumatic tire, the reference numeral 2 denotes a side portion of the pneumatic tire 1 including a sidewall portion and a bead portion. The pneumatic tire 1 of this embodiment is formed with various marks such as a brand name, a company name and tire size at least on one side of the tire side portions 2, i.e. at least on the outer surface of the side portion 2 which is visible from the exterior of the vehicle when the pneumatic tire 1 is mounted on the vehicle.

In addition, the tire 1 includes a region 4 where a plurality of ridges 3 each extending in a desired direction in a desired shape are arranged in an annular form concentric with the axis line of the tire on the surface of at least one of the side portions 2.

Further, a color line 5 is formed to extend either intermittently or continuously (continuously in Fig. 1) in an annular space situated on an inner peripheral side or radially inward from a region 4 where the ridges are arranged, and being radially inward from a tire maximum width position p. For example, the color line 5 is formed adjacent to and concentric with the region 4 where the ridges are arranged. Meanwhile, the color line 5 is formed by printing. In either case, the color line 5 has a color including white and black which is different from the base color of the surface of the side portion 2.

The color line 5 is formed on a flat surface of the inner peripheral side of the region 4 where the ridges are arranged in order to prevent an increase in air resistance of the tire while rolling under load. It is more preferable that the color line 5 be formed adjacent to the inner periphery of the region 4 where the ridges are arranged.

In addition, it is preferred that the color line 5 be formed at least between a radially outward region 6 where a brand name and a company name are relatively largely arranged to improve the identifiability and a regulatory marking region 8 which is situated radially outward from a rim line 7 and radially inward from the region 6 where the brand name and the like are arranged, and in which the size of the tire and the like are relatively small engraved. As a result, the highly decorative effect of the color line allows the marks formed radially inward and outward of the color line 5 to be distinctive to improve the identifiability of the marks.

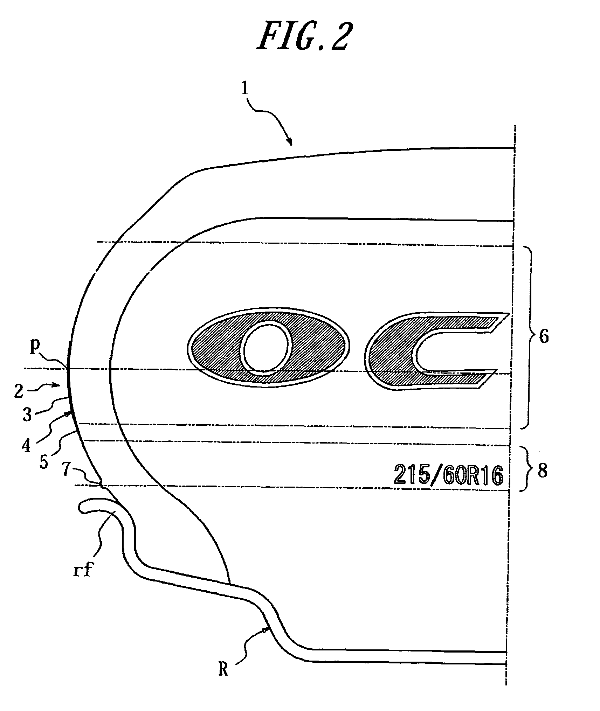

In Fig. 2, the reference R denotes an applicable rim, and the reference rf denotes a rim flange.

It should be noted that a part or all of the marks such as brand name in the region 6 may be formed within the region 4 where the ridges are arranged, or all of the marks may be formed only radially outward from the region 4 where the ridges are arranged.

Although the embodiment where the color line 5 extends continuously in the annular space over the entire circumference has been discussed with reference to the drawings, the color line 5 may also be arranged to extend intermittently around the axis line of the tire. In addition, while the tire shown in the drawings is a pneumatic tire, it may alternatively be a solid tire.

### REFERENCE SYMBOLS

- 1: Pneumatic tire
- 2: Side portion
- 3: Ridge
- 4: Ridge-arranged region
- 5: Color line
- 6: Region
- 7: Rim line
- 8: Regulatory marking region
- p: Tire maximum width position
- R: Applicable rim
- rf: Rim flange

## Claims

1. A tire (1) having a plurality of ridges (3) arranged in an annular form on a surface of a side portion (2), **characterised in that**
a color line (5) is formed to extend in an annular space situated on an inner peripheral side from a region (4) where the ridges (3) are arranged and radially inward from a tire maximum width position (p),
wherein, the color line (5) is formed on a flat surface situated on the inner peripheral side from the region (4) where the ridges (3) are arranged
wherein, the color line (5) is formed on a flat surface situated on the inner peripheral side from the region (4) where the ridges (3) are arranged and radially inward from a tire maximum width position (p), the color line (5) not overlapping the region (4) where the ridges (3) are arranged in the tire radius direction, the color line (5) being adjacent to the inner periphery of the region (4) where the ridges (3) are arranged, the color line (5) extending in an annular form, the color line (5) being formed by printing, and
wherein the width of the color line (5) in the tire radial direction is smaller than the width of the region (4) where the ridges (3) are arranged.

2. A tire according to claim 1, wherein the color line (5) is formed at least between a region (6) where a brand name and a company name are arranged and a regulatory marking region (8) situated radially outward from a rim line (7).

## Patentansprüche

1. Reifen (1) aufweisend eine Mehrzahl von Stegen (3), welche ringförmig auf einer Oberfläche eines Seitenabschnittes (2) angeordnet sind, **dadurch gekennzeichnet, dass**
eine Farblinie (5) so geformt ist, dass sie sich in einem ringförmigen Raum erstreckt, welcher auf einer inneren Umfangsseite angeordnet ist, relativ zu einem Bereich (4), wo die Stege angeordnet sind, und ausgehend von einer Stelle (p) einer maximalen Reifenbreite sich radial nach innen erstreckt,
wobei die Farblinie (5) auf einer flachen Oberfläche geformt ist, welche sich auf der inneren Umfangsseite befindet, relativ zu dem Bereich (4), wo die Stege (3) angeordnet sind,
wobei die Farblinie (5) auf einer flachen Oberfläche geformt ist, welche sich auf der inneren Umfangsseite befindet, relativ zu einem Bereich (4), wo die Stege (3) angeordnet sind, und radial nach innen relativ zu einer Stelle (p) einer maximalen Reifenbreite angeordnet ist, wobei die Farblinie den Bereich (4) nicht überlappt, wo die Stege (3) in Richtung des Reifenradius angeordnet sind, wobei die Farblinie (5) an den inneren Umfang des Bereiches (4) angrenzt, wo die Stege (3) angeordnet sind, wobei die Farblinie (5) sich ringförmig erstreckt, wobei die Farblinie (5) durch Drucken gebildet wird, und
wobei die Breite der Farblinie (5) in radialer Richtung des Reifens kleiner ist als die Breite des Bereiches (4), wo die Stege (3) angeordnet sind.

2. Reifen nach Anspruch 1, wobei die Farblinie (5) wenigstens zwischen einem Bereich (6), wo ein Markenname und ein Firmenname angebracht sind und einem radial außerhalb einer Felgenlinie (7) liegenden regulatorischen Kennzeichnungsbereich (8) gebildet wird.

## Revendications

1. Bandage pneumatique (1), comportant plusieurs nervures (3) agencées en une forme annulaire sur une surface d'une partie latérale (2), **caractérisé en ce que** :
une ligne de couleur (5) est formée de sorte à s'étendre dans un espace annulaire situé sur un côté périphérique interne par rapport à une région (4) dans laquelle les nervures (3) sont agencées, et radialement vers l'intérieur par rapport à une position à largeur maximale du bandage pneumatique (p) ;
dans lequel la ligne de couleur (5) est formée sur une surface plate située sur le côté périphérique interne par rapport à la région (4) dans laquelle les nervures (3) sont agencées,
dans lequel la ligne de couleur (5) est formée sur une surface plate située sur le côté périphérique interne par rapport à la région (4) dans laquelle les nervures (3) sont agencées, et radialement vers l'intérieur par rapport à une position à largeur maximale (p) du bandage pneumatique, la ligne de couleur (5) ne chevauchant pas la région (4) dans laquelle les nervures (3) sont agencées dans la direction du rayon du bandage pneumatique, la ligne de couleur (5) étant adjacente à la périphérie interne de la région (4) dans laquelle les nervures (3) sont agencées, la ligne de couleur (5) s'étendant en une forme annulaire, la ligne de couleur (5) étant formée par impression.; et
dans lequel la largeur de la ligne de couleur (5) dans la direction radiale du bandage pneumatique est inférieure à la largeur de la région (4) dans laquelle les nervures (3) sont agencées.

2. Bandage pneumatique selon la revendication 1, dans lequel la ligne de couleur (5) est formée au moins entre une région (6), dans laquelle un nom de marque et un nom de société sont agencés et une région de marquage réglementaire (8) située radialement vers l'extérieur d'une ligne de jante (7).
